Europäisches Patentamt

European Patent Office

Office européen des brevets

(19)

(11) Publication number: **0 421 483 A1**

## (12) EUROPEAN PATENT APPLICATION

(21) Application number: **90120624.3**

(22) Date of filing: **14.04.88**

(51) Int. Cl.5: **C02F 3/30, C02F 3/34**

This application was filed on 27 - 10 - 1990 as a divisional application to the application mentioned under INID code 60.

(30) Priority: **17.04.87 US 39969**
**25.01.88 US 147718**

(43) Date of publication of application:
**10.04.91 Bulletin 91/15**

(60) Publication number of the earlier application in accordance with Art.76 EPC: **0 287 088**

(84) Designated Contracting States:
**AT DE FR GB IT NL**

(71) Applicant: **ZABION LTD.**
**1961 Tonawanda Creek Road**
**North Tonawanda, NY 14120(US)**

(72) Inventor: **Northrop, Jere**
**1961 Tonawanda Creek Road**
**North Tonawanda, New York 14120(US)**

(74) Representative: **Weber, Dieter, Dr. et al**
**Dr. Dieter Weber und Dipl.-Phys. Klaus**
**Seiffert Patentanwälte**
**Gustav-Freytag-Strasse 25 Postfach 6145**
**W-6200 Wiesbaden 1(DE)**

(54) **Aqueous stream treatment process.**

(57) A process is disclosed for treating aqueous streams containing organics and/or phosphorus, which acts to significantly reduce the phosphorus content of the stream and/or remove biologically assimilatable organic material therefrom. The process selects assimilating microorganisms by establishing conditions in differential environments which enhance the assimilating functionality of the microorganisms and recycles the enhanced microorganisms to maximize their effect in reducing or removing organics from the process stream.

## AQUEOUS STREAM TREATMENT PROCESS

This invention relates to a novel process for treating aqueous streams containing organics and/or phosphorus, particularly raw or primary treated sewage streams, to significantly reduce the organic and/or phosphorus content thereof.

Background Of The Invention

The removal of phosphorus from effluent streams has taken on increasing importance in the modern world. The effect of phosphorus in waste sewage on the lakes and streams into which such sewage flows has been so serious that its removal has been a mandated requirement by multiple governmental authorities. When certain forms of phosphorus are present in lakes, rivers and streams, there is a significant increase in the growth of unwanted bacteria, algae and vegetation; which in turn acts to severely restrict the use that can be made of such waters, and can act to render such water useless, or, can deteriorate the health of man and his environment.

Similarly, the removal of organics from effluent streams has become of increased importance. The organic values of an effluent stream constitute a recycleable asset which can have significant commercial value. In many instances, recovery of organics can provide valuable protein and/or carbohydrate values which are desirable manufacturing staples. In many instances, the cost of governmental sewage treatment is directly related to the organic content of the influent stream, such that over-all organics reduction significantly reduces sewage treatment costs.

Many governmental sewage treatment facilities cannot, or at least have difficulty, processing higher levels of certain organic wastes, thus an effective method of reducing such levels can make the difference between whether a manufacturing facility can use existing public sewage systems or must pay for sophisticated alternate systems. Thus, the ability to reduce organic content in a waste effluent stream has significant value.

Many processes have been proposed for the removal of phosphorus from waste streams but most have been found to be either too ineffective, or to be too costly to be cost effective. Presently, the most frequently employed method of phosphorus removal is by treatment with precipitants. This process is achieved by the addition of metal oxides such as calcium, magnesium and sodium aluminate or by the addition of metal salts, such as chlorides and sulfates of aLuminum and iron to the waste stream. The addition of the afore described chemicals has some effect on the organic content also, typically resulting in the precipitating out of various organics, but such effect is of mixed practical importance. Such chemicals can be added at various stages of the treatment process and have been found particularly effective in phosphorus removal, but not without significant expense and the creation of additional problems.

The metal oxides typically used in such precipitant systems are strongly alkaline and effect a change in pH to the waste stream which may interfere with other processing functions or steps and often requires further treatment before returning such treated stream to the environment. Regulation of pH frequently requires additional equipment, sophisticated controls, furtther chemical treatment and additional operator attention. The metal salts also create problems in that they are typically strongly acidic.Dealing with them involves problems comparable to those resulting from the use of metal oxides except that an acid condition must be controlled. Additionally, the use of these chemicals requires accurate proportioning of chemical dosages to influent phosphorus loadings for efficient use of the chemicals. Sophisticated controls and/or continuing operator maintainence is required for efficient operation of such precipitant systems.

The use of the chemical precipitant methcd adds substantially to the cost of water treatment and increases the amount of sludge that must thereafter be disposed of. The precipitant formed in the use of metal salts is voluminous and does not compact well by the usual means employed. Consequently, the more metal salt used the greater the volume of sludge created. The precipitated sludge is high in organic content, but also contains a high phosphorus and metal ion content. Thus, the organic values are so contaminated as to be of little or no value for recycle. The use of metal oxides typically result in a cation contaminated effluent which remains in solution and can present a removal problem that eventually may be mandated for removal by governmental authority.

A promising, but less frequently employed method of phosphorus treatment comprises what is commonly known as the activated sludge process. In such process, biological growth colonies are typically developed in the waste water stream through treatment in the presence of oxygen. A biologically active sludge is thus formed which is recycled to the influent for biochemical reaction with the organisms in the influent to create bioprecipitation, adsorption, absorption and aqueous oxidation. The active microorganisms are periodically or continually introduced to the reactor. Though such process appears at first glance to be an inexpensive and highly desirable means of removing phosphorus, the activated sludge processes of the prior art have, in practice, been less efficient than desired and have required significant additions of precipitate to assure that a clear, substantially phosphorus free effluent, is attained. The low level of efficiency can be directly attributed to the limited phosphorus uptake by the bacteria in the waste stream being treated. By far, the most expensive element of an activated sludge process occurs when additional precipitating chemicals are required and it is not atypical that an activated sludge system may require the use of 50 % or more of the chemical precipitant necessary in a phosphorus precipitation process, to obtain an acceptable phosphorus free effluent level.

The US-A-3 386 911 discloses a combined chemical and biological process for treating liquid organic waste material containing phosphorus, to decrease the phosphorus content to a predetermined minimum concentration, comprising the steps of dosing the raw waste material with a limited amount of a chemical precipitant for phosphorus substantially less than the amount required to remove phosphorus to the predetermined concentration to form an insoluble precipitate of phosphorus; subjecting the dosed waste material to a first sedimentation to separate the material into sludge and an effluent; aerating the effluent to produce phosphorus consuming cell growth, subjecting the aerated effluent to a second sedimentation to remove the phosphorus-bearing biological sludge and produce a final effluent of the predetermined minimum phosphorus concentration.

One object of the instant invention is to improve the efficiency of the activated sludge process to attain greater phosphorus and/or organics removal without the use of precipitants. Another object of the invention is to reduce the chemical cost of treating phosphorus containing sewage. A further object is to treat phosphorus containing sewage in such manner which allows creation of an easily compactable sludge to reduce landfill requirements. A still further object is to treat organics containing streams in such manner as to attain a commercially desirable recycleable product. These and other objects of the invention will be apparent from the following disclosure of the invention.

## Summary of the Invention

The invention generally comprises a method for removing phosphorus and/or organic materials from aqueous streams by intimately mixing and interacting streams which have been separately exposed to differentially enhanced conditions. Such separate exposure and recombination of process streams which have been subjected to differentially enhanced conditions results in the maximizing of conditioned microorganisms which demonstrate an increased phosphorus and/or organics take-up in the combined stream and thus act to provide a higher degree of phosphorus and/or organics removal than typically experienced in prior art sludge treatment processes. I have found, that as a result of the imposition of appropriate differentially enhancing conditions on a process stream, that in most instances, no further chemical treatment need be applied to the system to attain efficient discharge falling well within regulatory standards. In situations where further treatment is necessary, the amount of chemicals utilized is relatively low and within easily manageable levels.

## Summary of tbe Invention

I have found that an effluent substantially free of assimilatable material can be attained from an aqueous stream by a relatively simple process, which exposes the stream to differential process conditions in such a manner as to cause microorganisms contained therein to take-up and/or then precipitate the assimilatable material in greater efficiency than previously thought possible.

Generally spoken, the process according to the invention comprises:
selecting assimilating microorganisms by establishing conditions in two or more differential environments to enhance the assimilative functionality of the microorganisms;
introducing the functionally enhanced assimilating microorganisms to at least a part of the influent stream;
intimately mixing said microorganisms with said influent stream and maintaining said mixture for a time sufficient to at least partially assimilate said assimilatable material;
separating at least part of the microorganism assimilated material from the treated influent stream;
Treating at least part of the assimilating microorganism to further enhance the assimilating functionality;
recycling the further enhanced assimilating microorganisms to said influent stream; and,
recovering at least a portion of said microorganism assimilated material.

Especially the invention refers to a proces for the removal of biologically assimilatable material from an aqueous influent stream, wherein assimilating enhanced microorganisms are introduced into an influent organics containing stream; the stream is aerated with the microorganisms intimately mixed therein; the mixed, aerated stream is clarifier, with at least a portion of the assimilating microorganisms being drawn-off and subjected to aeration; at least a portion of the aerating drawn-off microorganisms are separated; assimilated organics are recovered from at least a portion of the separated stream; at least a portion of the supernatant from the separated stream is recycled by aerating with the drawn-off microorganisms from the clarified stream; and, at least a portion of the assimilating enhanced microorganisms, from the separated stream, is recycled to comprise assimilating enhanced microorganisms for introduction in the influent organic stream. Preferably, said organics in said influent organics containing stream comprise at least one of protein and carbohydrate.

Though I wish not to be bound by the following, I believe that when bacteria, in phosphorus containing aqueous streams, are initially subjected to an anaerobic zone they tend to take-up only a small amount of the total free phosphorus that might be available in the process stream. I have found that for some reason, when bacteria are exposed to alternate aerobic, anaerobic, aerobic and anaerobic conditions that the amount of free phosphorus taken-up in the second aerobic zone is much higher (enhanced) than that taken-up in the first aerobic zone. I believe that this is because the bacteria anticipate the recurrence of anaerobic stress and as a result seek to protect themselves from such stress by creating a larger energy sump in the form of phosphorus en trained. If the alternating aerobic, anaerobic, aerobic and anaerobic conditions are removed, the bacteria will generally lose the capacity to anticipate conditions and consequently will no longer take-up the extra phosphorus to create a phosphorus rich condition.

In a similar manner, I believe that when aqueous streams are treated with typical microorganisms of the prior art, such as in the activated sludge systems of the prior art, that the ascimilating microorganism population is a much narrower population, typically comprising only the settled fraction of the total assimilating population. The non-settled population is typically not utilized and thus is not enhanced to benefit the system. I have found that when the assimilating microorganisms are exposed to two or more differential environments, that the assimilating functionality of the microorganisms significantly increases. This acts to provide more efficient take-up of biologically assimilatable material and results in greater process performance. This appears to result from the generation of several assimilating microorganism populations which provide a broader and more efficient range of assimilating activites as well as providing an increased concen tration of assimilating effect upon the biologically assimilatable material. By biologically assimilatable material is meant any material which is taken up by biological organisms. Such material may include any of the elements or chemical compounds, including metals, organics, inorganic materials and the like.

Thus I have developed a process which seeks to exploit the capacity of different microorganism populations to more efficiently assimilate materials than can typical processes of the prior art. The process comprises selecting appropriate assimilating microorganisms for the desired biologically assimilatable materials by establishing conditions in two or more differential environments to enhance the assimilating functionality of the microorganism population. The conditions are established by separating out the proliferating microorganism populations most suitable to differentially assimilate the various parts of the assimilatable material. These populations are then stimulated to proliferate at enhanced activity levels by introducing them to differential subenvironments which optimise their assimilative functionality. The assimilative functionality enhanced microorganisms are then re-introduced to the influent stream in intimate mixture. A portion of the enhanced assimilating microorganisms are re-cycled to the differential sub-environments to continue their proliferation and various microorganism assimilated materials are recovered.

When utilizing the process of the invention to assimilate phosphorus from an organics containing waste stream the process seeks to maximize the anticipation of stress in bacteria, which in turn maximizes the up-take of phosphorus by the bacteria, putting the phosphorus into a form in which it can be easily removed from a process stream. To this end, I propose adding previously anaerobically stressed and aerobically enhanced bacteria to an influent stream containing phosphorus and organic waste materials. The stressed and enhanced bacteria are intimately mixed into the influent stream and provide a basis for anticipation by subsequent generated bacteria. The mixed stream is divided into at least two separate streams for separate treatment. At least one of the separate streams is treated in an aerobic zone, in the presence of sufficient oxygen, for a time sufficient to enhance the bacteria contained in the stream, to take-up free phosphorus in excess of their life support requirements. Another of the separate streams is concurrently treated in an anaerobic zone, under oxygen deficient conditions, for a time sufficient to stress the bacteria contained therein and cause release of phosphorus held by the bacteria. The relatively oxygen rich, but free-phosphorus deprived stream coming from the aerobic zone is then intimately mixed with the free-phosphorus rich, but oxygen depleted, stream com ing from the anaerobic zone with the result being a rapid free-phosphorus take-up by the anaerobic treated bacteria in excess of its aerobically enhanced requirements. The system will tend toward a steady state and the already phosphorus-rich bacteria (aerobically enhanced), coming from the aerobic zone, will compete with the anaerobically stressed bacteria for the free-phosphorus and the result will be a steady state system with entrained phosphorus at a higher level than normally aerobically enhanced.

The thus high efficiency entrained phosphorus stream is then held in a quiescent state to allow the settling of the phosphorus enriched bacteria. The heavy sludge portion is removed for solid waste treatment or can be in part recycled. The supernatant is generally clear and may generally be discharged without further treatment.

Generally, a high degree of mixing is necessary when combining the separate streams which have been concurrently anaerobically and aerobically treated. I feel that an adequate degree of mixing can be attained by utilizing an appropriate static mixer such as subsurface aeration, weirs, baffles and venturi type mixers. Generally I prefer to utilize an aerating mixing means as it provides an additional aerobic treatment which can act to further increase the phosphorus uptake efficiency. Active mixing is generally the most convenient method and can act to provide additional aerobic treatment by assuring distribution of entrained oxygen. Multiple active mixers have been found suitable, including surface and subsurface, impeller mixers, shakers and the like. The most preferred mixing system comprises an active impeller mixer with aeration capacity.

The anaerobic zone can comprise a separate vessel, channel, pipe or the like and can be static or can comprise a flowing stream. It is preferred that an active current of some nature be maintained in the anaerobic zone to minimize settling of bacteria. Such current can be maintained by stream flow through the anaerobic zone, hydraulic turbulence, shaking, intermittent mixing and the like. A primary requirement in the anaerobic zone is the maintaining of a relatively oxygen free environment. For maximum efficiency of the process of the invention the anaerobic zone should contain less than approximately 1 ppm oxygen. For most purposes of my invention, I have found a closed vessel, with mechanical mixing means, to be a preferred anaerobic apparatus to achieve the objects of the invention.

The aerobic zone, as with the anaerobic zone, can comprise a separate vessel, channel, pipes and the like and can be static or can comprise a flowing stream. As with the anaerobic zone, a potential exists for the settling of phosphorus rich bacteria and it is desirable to maintain some aqueous current in the stream being treated. Equipment as previously described in the anaerobic zone can be effectively utilized for this purpose. A primary requirement of aerobic treatment is the maintaining of an oxygen rich environment and I find it preferable to maintain at least about 2 ppm and preferably more of oxygen to attain efficient phosphorus up-take. I find the most preferred level of environmental oxygen to be from about 3 or more ppm oxygen up to about saturation.

Generally the influent stream will contain adequate bacteria and biodegradable substrates to allow initiation of the process, but to attain efficient levels of phosphorus removal, recycling of previously stressed and enhanced bacteria generated in the aerobic zone by the process itself is necessary. I have generally found it appropriate to recycle a significant amount of bacteria to synergistically increase the phosphorus up-take activity of the original influent stream. Generally, the amount of bacteria recycled is based upon the desire to recycle bacteria at least once and probably twice or more through the system to attain adequate levels of anticipation by the bacteria. I have generally found it appropriate to continually mix the recycled bacteria laden sludge with the influent to maximize the efficiency of the process. Static and active mixers, as described for use in the previous paragraphs, have been found appropriate for such use.

Holding of the intimately mixed process streams can be achieved by multiple means. Generally it is adequate to hold the mixed stream in a large vessel sufficient to avoid a significant flow which could disrupt the gradual settling of the aqueous biomass. Generally, a detention time of about one hour or more is appropriate to obtain adequate separation of the biomass to form the activated sludge and to achieve a substantially clear, phosphorus free supernatant. The holding means can be by continuous or batch processing means but generally a continuous process is preferred. In such latter situations, weirs and baffles are incorporated into the vessel to assure efficient settling of the supernatant liquid prior to migration from the holding vessel.

Precipitants are not typically necessary for efficient operation of the process, but if desired they may be added at any point in the process. Generally they are preferably added at the point of mixing of the separate streams or during the holding period. The prior art is replete with various precipitants that may be utilized and such is meant to be incorporated into my process.

Stressed and enhanced bacteria can be obtained at any point after the separate streams are mixed after flowing from the aerobic and anaerobic zones. A most preferred recycle sludge, however, is aged sludge from the holding tank.

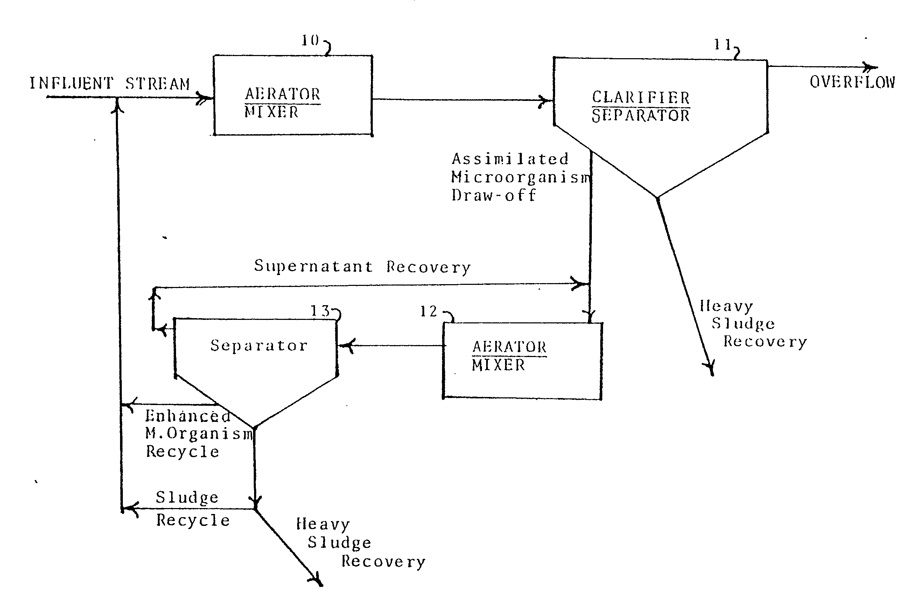

The drawing is a flow diagram representing the recovery of biologically assimilatable materials in accord with the process of the invention.

Therein, the influent stream is combined with the previously enhanced microorganisms, intimately mixed and aerated in aeration/mixing zone 10. The mixed and aerated stream is then passed to clarifier/separator zone 11. At the clarifier/separator, substantially pure water is recovered from the overflow and microorganism assimilated material is recovered from the heavy sludge recovery. An assimilated microorganism draw-off, collected at about the supernatant/sludge interface of the clarifier/separator is recovered, aerated with mixing in aerator/mixer zone 12, and passed to separator zone 13. Supernatant from the separator zone 13 is recycled to the assimilated microorganisms draw-off- from the clarifier/separator for return to aerator/mixer zone 12. The heavy sludge is in part returned, together with enhanced microorganism draw-off from the supernatant/sludge interface of the separator and constitutes the enhanced microorganisms for mixing with the influent stream.

## Claims

1. A process for the removal of biologically assimilatable material from an aqueous influent stream wherein assimilating enhanced microorganisms are introduced into an influent organics containing stream; the stream is aerated with the microorganisms intimately mixed therein; the mixed, aerated stream is clarified, with at least a portion of the assimilating microorganisms being drawn-off and subjected to aeration; at least a portion of the aerated drawn-off microorganisms are separated; assimilated organics are recovered from at least a portion of the separated stream; at least a portion of the supernatant from the separated stream is recycled by aerating with the drawn-off microorganisms from the clarified stream; and, at least a portion of the assimilating enhanced microorganisms, from the separated stream, is recycled to comprise assimilating enhanced microoganisms for introduction in the influent organic stream.

2. The process of claim 1 wherein said organics in said influent organics containing stream comprise at least one of protein and carbohydrate.

Process flow diagram. Labels:

- INFLUENT STREAM → AERATOR / MIXER (10) → CLARIFIER / SEPARATOR (11) → OVERFLOW
- CLARIFIER / SEPARATOR (11): Heavy Sludge Recovery
- Assimilated Microorganism Draw-off → AERATOR / MIXER (12) → Separator (13)
- Supernatant Recovery
- Separator (13): Heavy Sludge Recovery; Enhanced M. Organism Recycle; Sludge Recycle → INFLUENT STREAM

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | US-A-3 386 911  (O.E. ALBERTSON) <br> * Whole document * <br> – – – | 1,2 | C 02 F 3/30 <br> C 02 F 3/34 |
| A | US-A-4 488 968  (E. SUN-NAN HONG) <br> * Figure 2; column 4, line 54 - column 5, line 2 * <br> – – – – – | 1 | |

TECHNICAL FIELDS
SEARCHED (Int. Cl.5)

C 02 F

The present search report has been drawn up for all claims

| Place of search | Date of completion of search | Examiner |
|---|---|---|
| The Hague | 06 December 90 | GONZALEZ ARIAS M.L. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document